# EUROPEAN PATENT SPECIFICATION

(11) **EP 4 137 866 B1**
(45) Date of publication and mention of the grant of the patent: **02.12.2026**
(21) Application number: 21191927.9
(22) Date of filing: 18.08.2021
(51) Int. Cl.: G02B 21/36, G02B 21/00, G02B 27/00, G02B 3/14

(54) **DIGITAL MICROSCOPE AND METHOD FOR CAPTURING AND DISPLAYING MICROSCOPIC IMAGES**
DIGITALES MIKROSKOP UND VERFAHREN ZUR AUFNAHME UND DARSTELLUNG MIKROSKOPISCHER BILDER
MICROSCOPE NUMÉRIQUE ET PROCÉDÉ DE CAPTURE ET D'AFFICHAGE D'IMAGES MICROSCOPIQUES

(43) Date of publication of application: 22.02.2023
(73) Proprietor: Carl Zeiss Microscopy GmbH, 07745 Jena (DE); SD Optics, Inc., Seoul (KR); Stereo Display, Inc., Anaheim, CA 92801 (US)
(72) Inventor: GAIDUK, Alexander, 07749 Jena (DE); SOHN, Jin Young, Fullerton, 92833 (US); SEO, Cheong Soo, Brea, 92821 (US); CHO, Gyoungil, Fullerton, 92833 (US)
(74) Representative: Rittermann, Marco

(56) References cited:
- US-A1- 2014 022 236
- US-A1- 2015 145 980
- US-A1- 2018 143 419
- US-A1- 2020 195 836
- ANONYMOUS: "TAGLENS VARIOFOKUS-OBJEKTIV", 20 November 2020 (2020-11-20), XP055885059, Retrieved from the Internet <URL:https://www.mitutoyo.pt/application/files/3316/0432/3799/PR14982_TAGLENS_WEB.pdf> [retrieved on 20220128]
- ANONYMOUS: "Vision Engineering DRV-Z1 product brochure", 24 May 2019 (2019-05-24), XP055885077, Retrieved from the Internet <URL:https://uploads-ssl.webflow.com/5fa655b56251b0e528b5207a/5fb38f4f2c09a8d685293090_brochure-vision1.pdf> [retrieved on 20220128]
- ANONYMOUS: "Software Guide Zen 2 (blue edition)", 7 November 2014 (2014-11-07), XP055885407, Retrieved from the Internet <URL:https://www.unige.ch/medecine/bioimaging/files/3914/3765/2064/ZEN_2_blue_edition_-_Software_Guide.pdf> [retrieved on 20220131]

## Description

The present invention concerns a method for capturing and displaying microscopic images of a sample to be microscopically examined using a digital microscope. The microscopic images comprise enhanced visual information in a third geometric dimension such as images with an extended depth of field (EDoF) or three-dimensional images. These microscopic images are captured and displayed live. Furthermore, the present invention concerns a digital microscope.

US 2005/0057812 A1 shows a variable focus system that includes an electrovariable optic and a controller operatively configured for changing the focal configuration of the electrovariable optic. The electrovariable optic includes a plurality of movable optical elements for changing the focal length of the electrovariable optic or the direction of the focal axis of the electrovariable optic. The variable focus system may be used in conjunction with an image source to construct a 3D floating image projector that projects a series of 2D image.

US 2014/0368920 A1 shows micro-mirror arrays that are configured for use in a variable focal length lens. The variable focal length lens comprises a micro-mirror array having a plurality of micro-mirror element arranged in at least a first section and a second section.

DE 10 2017 107 489 B3 is related to a microscope assembly for the three-dimensional capture of a sample to be microscopically examined and for the display of three-dimensional images of the sample under the microscope. The microscope assembly comprises an image capture unit for obtaining photographs of the sample and an image processing unit for generating three-dimensional images of the sample from the photographs.

WO 2007/134264 A2 shows a three-dimensional imaging system with a variable focal length micromirror array lens. The micro mirror array lens comprises a plurality of micromirrors, wherein each of the micromirrors is controlled to change the focal length of the Micromirror Array Lens. The imaging system further comprises an optical unit and an image processing unit which produces three-dimensional image data using the images captured by the optical unit and the focal length information of the Micromirror Array Lens.

US 2017/0061601 A1 teaches a method for defining operations for acquiring a multi-exposure image of a workpiece including first and second regions of interest at different Z heights. The multi-exposure image is acquired by a machine vision inspection system including strobed illumination and a variable focal length lens used for periodically modulating a focus position.

US 2012/0050562 A1 shows a digital imaging system being configured for synthesizing an image of a plenoptic optical device. The plenoptic optical device comprises a photosensor array with a plurality of photosensors arranged in a predetermined image plane. Further, the plenoptic optical device comprises a microlens array with a plurality of microlenses arranged for directing light from an object to the photosensor array.

In the product information sheet by NEDINSCO B.V.: "DEPTH-VIEW PRO ", 2020, a vision system is presented that sharply images 3D objects with fine details at high speed.

KR 1020180076466 A shows an inspection apparatus which comprises a socket belt transferring a plurality of objects and a plurality of inspection modules arranged along the socket belt.

EP 3 486 706 A1 concerns a functional module for a microscope. The functional module comprises an image sensor and two microelectromechanical optical systems for enhancing a depth of field on two optical subpaths.

US 2013/0321927 A1 teaches a system with a lens that shows a tuneable acoustic gradient index of refraction. This system permits a dynamic selection of the lens output including dynamic focusing and imaging.

In the product information sheet by Carl Zeiss Industrielle Messtechnik GmbH: "ZEISS Visioner 1", 2020, a digital microscope for real-time all-in-focus imaging is presented. A sample can be viewed completely in focus in real-time. This aims at a faster inspection of components. The microscope offers different operating modes. Each mode is designed to have its own parameters for acquisition, processing and post-processing. The customer is free in selecting many parameters, controlling them and adjusting them.

US 2018/0143419 A1 teaches an imaging system including a tuneable acoustic gradient (TAG) lens that is associated with a user interface including a live display of an extended depth of field (EDOF) image. The TAG lens is utilized to produce a raw EDOF image, which may include defocus blur. The live EDOF image is repetitively updated in the user interface based on a translation state signal at a current time. In response to a current state of the translation state signal, a corresponding type of live EDOF image of the workpiece is displayed in the user interface corresponding to an EDOF image data set that is based on a corresponding level of image processing to remove defocus blur.

US 2015/0145980 A1 teaches a method for operating an imaging system of a machine vision inspection system to provide an extended depth of field (EDOF) image. The method comprises a step of placing a workpiece in a field of view. In a further step, a focus position of the imaging system periodically modulated without macroscopically adjusting the spacing between elements in the imaging system. The focus position is periodically modulated over a plurality of positions along a focus axis direction in a focus range including a workpiece surface height. A first preliminary image is exposed during an image integration time while modulating the focus position in the focus range. The first preliminary image is processed to remove blurred image contributions occurring in the focus range during the image integration time to provide an EDOF image that is focused throughout a larger depth of field than the imaging system provides at a single focal position.

US 2020/0195836 A1 shows a method for operating a tuneable acoustic gradient (TAG) lens imaging system. The method includes a step of providing a smart lighting pulse control routine/circuit (SLPCRC) that provides a first mode of exposure control corresponding to a point from focus (PFF) mode of the TAG lens imaging system and a second mode of exposure control corresponding to an extended depth of focus (EDOF) mode of the TAG lens imaging system. A workpiece is placed in a field of view of the TAG lens imaging system. A focus position of the TAG lens imaging system is periodically modulated without macroscopically adjusting the spacing between elements in the TAG lens imaging system. The focus position is periodically modulated over a plurality of focus positions along a focus axis direction in a focus range including a surface height of the workpiece, at a modulation frequency of at least 30 kHz.

An object of the present invention is to allow a user-friendly and efficient workflow for capturing and displaying microscopic images with enhanced visual information in a third geometric dimension such as images with an extended depth of field (EDoF) or three-dimensional images.

The aforementioned object is achieved by a method according to the enclosed claim 1 and by a digital microscope according to the enclosed claim 13.

The method according to the invention aims at capturing and displaying microscopic images of a sample to be microscopically examined using a digital microscope. The third geometric dimension lies preferably in an optical axis used for capturing the microscopic images. Hence, this third geometric dimension is preferably a depth of the sample. Regular two-dimensional images comprise visual information of the sample in a first geometric dimension and a second geometric dimension. The first geometric dimension and the second geometric dimension are usually width and height. Hence, the visual information in the first geometric dimension and the visual information in the second geometric dimension arise from a two-dimensional object plane. The enhanced visual information in the third geometric dimension arises from different object planes, especially, from an object volume. The third dimension is preferably perpendicular to the first dimension and preferably perpendicular to the second dimension.

The method allows configuring a digital microscope in order to capture and to display the enhanced microscopic images of the sample. This configuring can be done user-friendly and efficiently by a user of any level of education and preparation.

The method comprises a step of capturing a sequence of microscopic images with the enhanced visual information in the third geometric dimension. This sequence of microscopic images is preferably captured live. A frame rate of the sequence of microscopic images is preferably at least one image per second and, more preferably, at least 10 images per second. The skilled person can easily adopt other suitable frame rates.

In a further step, the sequence of the microscopic images is displayed while it is captured. Hence, each of the microscopic images is displayed immediately after it has been captured. A delay of displaying one of the microscopic images after its capturing is preferably less than one second and, more preferably, less than 0.1 second. The sequence of microscopic images is preferably displayed live. The sequence of microscopic images is preferably displayed at a graphical user interface.

The method comprises a step of determining a capturing range in the third geometric dimension depending on an extent of an area of interest of the sample. This determination is preferably done automatically during an initiation of a microscopic examination of the sample. In a simple embodiment, the area of interest of the sample is along the whole extent of the sample in the third dimension and, therefore, the initial capturing range in the third geometric dimension equals to the extent of the sample in the third geometric dimension. In a preferred embodiment, the area of interest of the sample is determined by a user input at the graphical user interface. In another preferred embodiment, the area of interest of the sample is determined automatically by image data processing of the captured microscopic images. The determined initial capturing range in the third geometric dimension can be named as initial experiment z-range "expZrange" since the microscopic inspection as it is expected in the third dimension will experimented in this range in the third geometric dimension. The enhanced visual information in the third geometric dimension will be captured in this capturing range. For this, properties and parameters of the microscope will be chosen in order to ensure that the enhanced visual information in the third geometric dimension can be captured in this capturing range.

In a further step, a visual representation of the capturing range of the third geometric dimension is displayed at the graphical user interface of the digital microscope. The visual representation represents the capturing range including its lower limit and its upper limit. By this visual representation, a user can visually recognize the capturing range in the third geometric dimension. The user can visually recognize how large this range is**.** The user can visually recognize the limits of this range. This visual representation of the capturing range is displayed in order to allow the user to input at least one adjustment of this range. At least the lower limit of the capturing range and the upper limit of the capturing range are adjustable at the graphical user interface. The at least one adjustment is preferably a limitation, an expansion or a shifting of the capturing range. The at least one adjustment results in an adjusted lower limit of the capturing range and/or an adjusted upper limit of the capturing range. The user inputs this at least one adjustment at the graphical user interface. In a further step, the user input that defines the at least one adjustment of the capturing range in the third geometric dimension is received. This results in an adjusted capturing range in the third geometric dimension. The received user input is electronically processed. Preferably, the visual representation of the capturing range is refreshed while the user inputs the modification. Hence, a visual representation of the adjusted capturing range is displayed.

In a further step, at least one parameter of detecting visual information in the third geometric dimension is adjusted according to the adjusted capturing range in the third geometric dimension. Hence, this at least one parameter is adjusted according to the received user input. This at least one parameter is adjusted at least according to the adjusted lower limit of the capturing range and/or the adjusted upper limit of the capturing range. The at least one parameter defines how the visual information in the third geometric dimension is captured and/or processed and/or displayed. The at least one parameter effects the extent and/or quality of the visual information in the third geometric dimension. Preferably, at least two parameters of detecting visual information in the third geometric dimension are adjusted according to the adjusted capturing range. More preferably, at least four parameters of detecting visual information in the third geometric dimension are adjusted according to the adjusted capturing range.

According to the method, capturing the sequence of the microscopic images with the enhanced visual information in the third geometric dimension is continued applying the at least one adjusted parameter. Likewise, displaying the sequence of microscopic images is continued. The at least one adjusted parameter is applied when capturing and/or processing and/or displaying the microscopic images of the sequence of microscopic images with the enhanced visual information in the third geometric dimension after the user has input the at least one adjustment of the range in the third geometric dimension.

A special benefit of the method according to the invention is that the user can easily control the capturing and displaying of the microscopic images with enhanced visual information in the third geometric dimension such as images with an extended depth of field (EDoF) or three-dimensional images. The user has to adjust the range of the third geometric dimension as it is necessary for the inspection of the sample, wherein further parameters for capturing and/or processing and/or displaying the microscopic images are adjusted automatically depending on that user input. Preferably, the user has to input the adjustment of the capturing range as the only quantitative parameter that influences the capturing, processing, and displaying of the microscopic images. Preferably, the graphical user interface allows the adjustment of the capturing range as the only quantitative parameter that is adjustable.

In preferred embodiments, the images with the enhanced visual information in the third geometric dimension are images with an extended depth of field (EDoF) or 2.5-dimensional images or three-dimensional images. The images with an extended depth of field are preferably completely in focus. These images can be named as all-in-focus images. The images with an extended depth of field are preferably completely sharp. The depth of the images with an extended depth of field is increased by a factor of preferably at least 5 and more preferably at least 10. The 2.5-dimensional images comprise information in the third geometric dimension that is not complete as the visual information in the first and second geometric dimensions. The thee-dimensional images comprise complete visual information in the first, second, and third geometric dimensions.

The least one parameter of detecting visual information in the third geometric dimension is at least one of a selection of an objective of a set of exchangeable objectives, an optical magnification of an objective, a step size in the third geometric dimension, a number of steps in the third geometric dimension, a number of images per stack, a field of view, an illumination setting, an illumination condition, an option for an automatic correction of reflexes, an option for an automatic telecentric correction, a rate of images per second, a rate of volumes per second, a depth quality threshold, a smoothing index, an index of a pixelwise iteration, a depthwise kernel size, a value of a bilateral sigma colour, a value of a bilateral sigma space; a resize ratio, a number of threads, a spectral range of an illumination, a frequency of a stroboscopic illumination, an acquisition time, a selection of rings of illumination, a selection of a coaxial illumination, an exposure time, a mode of white balance, and/or a camera gain. Especially, the at least one parameter of detecting visual information in the third geometric dimension is preferably a step size in the third geometric dimension, a number of steps in the third geometric dimension, an acquisition time, and/or a camera gain. More preferably, the parameters of detecting visual information in the third geometric dimension are a step size in the third geometric dimension, a number of steps in the third geometric dimension, an acquisition time, and a camera gain.

In preferred embodiments, an available range in the third geometric dimension is determined based on properties of the used digital microscope. The enhanced visual information in the third geometric dimension is available in the available range by using the digital microscope in its current configuration. The enhanced visual information in the third geometric dimension can be captured in the available range by using the digital microscope in its current configuration. This available range in the third geometric dimension can be named as maximum z-range "MaxZrange" since it is a maximum range, in which the enhanced visual information in the third geometric dimension can be captured. This available range in the third geometric dimension is determined based on the properties of the digital microscope in its current configuration, wherein these properties preferably comprise a present magnification, especially, an optical magnification of an objective of the microscope. This magnification is preferably determined automatically by detecting the present objective, e. g. a selected one of a set of exchangeable objectives. The properties of the digital microscope to be used for determining the available range preferably comprise further measures and parameters such as a focal length, an illumination, and/or an aperture.

In preferred embodiments, the visual representation of the capturing range in the third geometric dimension is an inner bar. The inner bar is located within an outer bar. The outer bar visually represents the available range in the third geometric dimension. The user can easily perceive in which quantitative relation the capturing range stands to the available range. Preferably, the upper limit and the lower limit of the capturing range are visually emphasized by extended lines at the ends of the inner bar. Preferably, a centre of the capturing range is visually emphasized by an extended line across the inner bar. The centre of the capturing range is preferably determined based on a position of an actuator of an apparatus for gathering the enhanced visual information in the third geometric dimension.

The inner bar is preferably refreshed while the user inputs the adjustments of the capturing range. Hence, the inner bar permanently represents the modified capturing range in its current status.

In preferred embodiments, the method comprises a further step that is an initial step for configuring the digital microscope before the sample is microscopically examined by the user. In this step, parameters of capturing and/or displaying the microscopic images with the enhanced visual information in the third geometric dimension are automatically determined. This determination is preferably based on recognized characteristics of the sample to be microscopically examined. These characteristics preferably comprise an extent of the sample in the third geometric dimension.

The parameters of capturing and/or displaying the images with the enhanced visual information in the third geometric dimension to be automatically determined preferably comprise a step size in the third geometric dimension, a number of steps in the third geometric dimension, a number of images per stack, a selection of an objective of a set of exchangeable objectives, an optical magnification of an objective, an illumination, a spectral range of an illumination, a frequency of a stroboscopic illumination, an acquisition time and/or a camera gain. The objective of the set of exchangeable objectives is preferably selected as its field of view fits to a size of the sample to be microscopically examined or to the area of interest. The objective of the set of exchangeable objectives is preferably selected as it suitable for capturing of enhanced visual information in a third geometric dimension in the initial capturing range. The determined parameter of illumination preferably defines a maximum of the illumination. The determined acquisition time preferably defines a minimum of the acquisition time in order to ensure fastest acquisition. The determined camera gain ensures optimal sample illumination and/or a low degree of overexposed and underexposed areas of the sample as well as appropriate noise. The named parameters preferably ensure an auto-exposure process. Preferably, a number of images per stack is determined initially. As an example, this number is 10 images per stack.

Preferred embodiments of the method comprise further steps for defining an illumination by the user. A visual representation of an available exposing range is displayed at the graphical user interface. That available exposing range ranges from a minimally available exposure to a maximally available exposure of the sample. A further user input is received that defines a selected exposing range that ranges from a minimally applicable exposure to a maximally applicable exposure of the sample. The selected exposing range is a subset of the available exposing range. Preferably, the selected exposing range is visually represented at the graphical user interface as an inner bar. This inner bar is in an outer bar. Preferably, the outer bar visually represents the available exposing range. The inner bar is preferably refreshed after the user input. The sample is illuminated by an illumination in the selected exposing range.

The method according to the invention is suitable for a live investigation of a sample to be microscopically analysed. The displayed microscopic images are watched live by the user. The user can move the sample and/or move optics. Hence, this mode of investigation can be named as "live" mode or "navigation" mode. Preferred embodiments offer a further mode of investigation. According to that further mode, single microscopic images are captured and displayed as a still image. This mode can be named as "snap" mode. Preferably, a toggle button is displayed at the graphical user interface. The user can toggle between the "live" mode and the "snap" mode. A user input of toggling the toggle button is received. After this, microscopic images are captured and displayed according to the selected mode of investigation.

Preferred embodiments of the method comprise steps for selecting a mode of capturing the microscopic images. A first menu is displayed at the graphical user interface. The first menu comprises at least two menu items. Each of the menu items stands for a mode of capturing microscopic images. The modes describe the technical manner and/or technical parameters of capturing the microscopic images. The modes preferably describe the capturing of two-dimensional microscopic images, auto-focused two-dimensional images or microscopic images with enhanced visual information in the third geometric dimension. At least one of the modes describes capturing of microscopic images with enhanced visual information in the third geometric dimension. The user selects the required mode by choosing the corresponding menu item. In a further step, a user input of selecting one of the menu items of the first menu is received. After this, the microscopic images are captured according to the selected mode.

Further embodiments of the method comprise steps for selecting a mode of displaying the microscopic images. A second menu is displayed at the graphical user interface. The second menu comprises at least two menu items. At least one of the menu items stands for a mode of displaying the microscopic images with enhanced visual information in the third geometric dimension. This at least one mode describes the technical manner and/or technical parameters of displaying the microscopic images with enhanced visual information in the third geometric dimension. The user selects the required mode by choosing the corresponding menu item. In a further step, a user input of selecting one of the menu items of the second menu is received. After this, the microscopic images are displayed according to the selected mode.

The at least one mode of displaying the microscopic images with enhanced visual information in the third geometric dimension represented by one of the menu items of the second menu is preferably a mode of displaying the microscopic images with enhanced visual information in the third geometric dimension as images with an extended depth of field (EDoF).

The at least one mode of displaying the microscopic images with enhanced visual information in the third geometric dimension represented by one of the menu items of the second menu is preferably a mode of displaying the microscopic images with enhanced visual information in the third geometric dimension as a heightmap.

The at least one mode of displaying the microscopic images with enhanced visual information in the third geometric dimension represented by one of the menu items of the second menu is preferably a mode of displaying the microscopic images with enhanced visual information in the third geometric dimension as a 2.5-dimensional image or as a three-dimensional image. Such images can also be named as topographic images. Hence, this mode can be named as "topo" mode.

Preferably, the second menu comprises at least one of the menu items that stand for a mode of displaying further microscopic images with enhanced visual information in the third geometric dimension as at least one still image. Such a mode can be named as a "snap" mode. This mode is preferably a mode of displaying the further microscopic images with enhanced visual information in the third geometric dimension as at least one still image with an extended depth of field (EDoF). Alternatively or additionally, it is a mode of displaying the further microscopic images with enhanced visual information in the third geometric dimension as a 2.5-dimensional still image or as a three-dimensional still image. In these "snap" modes, the further microscopic images with enhanced visual information in the third geometric dimension are preferably stored for later processing.

In other more preferred embodiments, the second menu is not necessary since a mode of displaying is selected automatically. A mode of displaying the microscopic images with enhanced visual information in the third geometric dimension as images with an extended depth of field (EDoF) is preferably selected automatically if the user uses a two-dimensional display for watching the microscopic images. A mode of displaying the microscopic images with enhanced visual information in the third geometric dimension as 2.5-dimensional images or as three-dimensional images is preferably selected automatically if the user uses a 2.5-dimensional display or a three-dimensional display for watching the microscopic images. The 2.5-dimensional display or the three-dimensional display is preferably a 3D stereo display or 3D glasses.

In preferred embodiments of the method, a further option is displayed at the graphical user interface. This option can be displayed as a single button or as a third menu at the graphical user interface. This option stands for a mode of displaying the microscopic images with enhanced visual information in the third geometric dimension as images showing an extended depth of field and/or showing a focused area, wherein the extended depth of field and the focused area, respectively, are at least present in at least one region of interest. This embodiment is inspired by the analogy with human vision. This embodiment results in a reduced field of view since parts of the images outside the region of interest are not necessarily displayed with an extended depth of field and as focused areas, respectively. The region of interest is preferably selected automatically by tracking an eye of the user. Alternatively, the region of interest is preferably selected by the user at the graphical user interface. A special benefit of this preferred embodiment is a high frame rate that it can offer. The reduction to the region of interest allows displaying the extended depth of field and/or the focused visual information at a higher rate. This frame rate is preferably at least 10 images per second and more preferably at least 25 images per second.

Displaying the microscopic images with enhanced visual information in the third geometric dimension as microscopic images that show a focused area in the region of interest is in accordance with an alternative "live" mode. That mode can be preferably configured as a "fast focus" mode or as a "very fast focus" mode. The region of interest will be set in focus in a short time that is preferably less than 200 ms after the user has chosen the region of interest, e. g. by moving to the this region of the sample or by moving a pointer at the graphical user interface to the region of interest. Alternatively, the user moves the sample to the region of interest and leaves the region of interest unchanged. Alternatively, the user combines a movement of the sample and a movement of the pointer at the graphical user interface.

Displaying the microscopic images with enhanced visual information in the third geometric dimension as images showing an extended depth of field in the region of interest is in accordance with an alternative "live" mode. That mode can be preferably configured as a "fast EDoF" mode. For this, a stack of microscopic images is captured and processed. The extended depth of field is present in the region of interest, whereas areas around the region of interest can contain image information that is not in focus what is similar to human vision. The position of the region of interest can be controlled by the user at a volume rate that is preferably between 10 and 30 volumes per second.

Displaying the microscopic images with enhanced visual information in the third geometric dimension as microscopic images that show an extended depth of field and a focused area in the at least one region of interest is in accordance with an alternative "live" mode. That mode can be preferably configured as a "fast focus and fast EDoF" mode. Preferably, the microscopic images with enhanced visual information in the third geometric dimension are displayed as microscopic images that show an extended depth of field and a focused area in more than one region of interest at once.

Preferably, a third menu is displayed at the graphical user interface. This third menu comprises at least two menu items. One of the menu items stands for a mode of displaying the microscopic images with enhanced visual information in the third geometric dimension as images showing a focused area in a region of interest. This mode can be a "fast focus" mode or a "very fast focus" mode. Alternatively or additionally, one of the menu items stands for a mode of displaying the microscopic images with enhanced visual information in the third geometric dimension as images showing an extended depth of field in a region of interest. This mode can be a "fast EDoF" mode. Alternatively or additionally, one of the menu items stands for a mode of displaying the microscopic images with enhanced visual information in the third geometric dimension as images showing an extended depth of field and a focused area, wherein the extended depth of field and the focused area are at least present in at least one region of interest. This mode can be a "fast focus and fast EDoF" mode. In preferred embodiments of the method, a tool for measuring the sample is offered to the user. This tool is especially offered in the "live" mode or in the alternative "live" mode. The tool for measuring is presented at the graphical user interface. The tool is preferably presented in form of graphical pointers in the displayed microscopic images. The user uses this tool resulting in a user input. This user input on that tool is received. Geometric data are determined by image data processing of the captured sequence of the microscopic images with the enhanced visual information in the third geometric dimension. Typically, parameters of the microscope such as an optical magnification of an objective and a position of a sample table of the microscope are additionally used for transforming the captured sequence of the microscopic images into the geometric data. The geometric data describe the sample. The geometric data preferably describe an extent of the sample in the three dimensions. The user input is applied to the geometric data in order to calculate a measure of the sample. This is the measure that was requested by the user using the tool, e. g. by setting two pointers at the displayed microscopic images of the sample. The measure is preferably a distance between two points at the sample. The calculated measure is output at the graphical user interface, especially as a value.

The microscope according to the invention is a digital microscope, in which microscopic images are captured electronically and processed digitally. The digital microscope is configured for capturing microscopic images of a sample to be microscopically examined.

The digital microscope comprises an objective for gathering light from the sample to be microscopically examined. The objective comprises at least one optical lens. The objective preferably comprises a plurality of the optical lenses.

The digital microscope comprises at least one image sensor for converting an image transferred from the objective to the image sensor into an electrical signal. From there, the image sensor converts an image taken by the objective into an electrical signal. The image sensor is preferably a semiconductor, e. g.**,** a CMOS.

The digital microscope further comprises an illumination unit for illuminating the sample.

The digital microscopic images show enhanced visual information in a third geometric dimension. For this, the digital microscope comprises an apparatus for capturing enhanced visual information in the third geometric dimension. This apparatus preferably comprises a microelectromechanical optical system on an optical path from the objective to the image sensor. The microelectromechanical optical system is configured for extending a depth of field on the optical path from the objective to the image sensor. The microelectromechanical optical system is preferably a Micromirror Array Lens System (MALS) or a Micromirror Array Lens (MMAL). Alternatively, the apparatus for capturing enhanced visual information in the third geometric dimension is preferably an actuator for changing a distance between the sample and the image sensor. The general principle and methods for making the Micromirror Array Lens are disclosed in US 6,934,072 B1; US 6,934,073 B1; US 6,970,284 B1; US 6,999,226 B2; US 7,031,046 B2; US 7,095,548 B1; US 7,161,729 B2; US 7,239,438 B2; US 7,267,447 B2; US 7,274,517 B2; and US 7,619,807 B2.

The digital microscope further comprises a graphical user interface that is presentable to the user.

The digital microscope further comprises a control circuitry that is configured for executing the method according to the invention. Preferably, the control circuitry is configured for executing a preferred embodiment of the method according to the invention. The control circuitry is preferably a computer.

The digital microscope preferably shows features that are described in regard to the method and its preferred embodiments.

Preferably, the digital microscope further comprises a sample table for holding the sample. The sample table is preferably moveable.

Preferably, the control circuitry is further configured to control the illumination unit, the moveable sample table, the apparatus for capturing enhanced visual information in the third geometric dimension, and the graphical user interface. Preferably, the control circuitry is further configured to determine properties and parameters of the objective, of the image sensor, of the illumination unit, and/or of the apparatus for capturing enhanced visual information in the third geometric dimension.

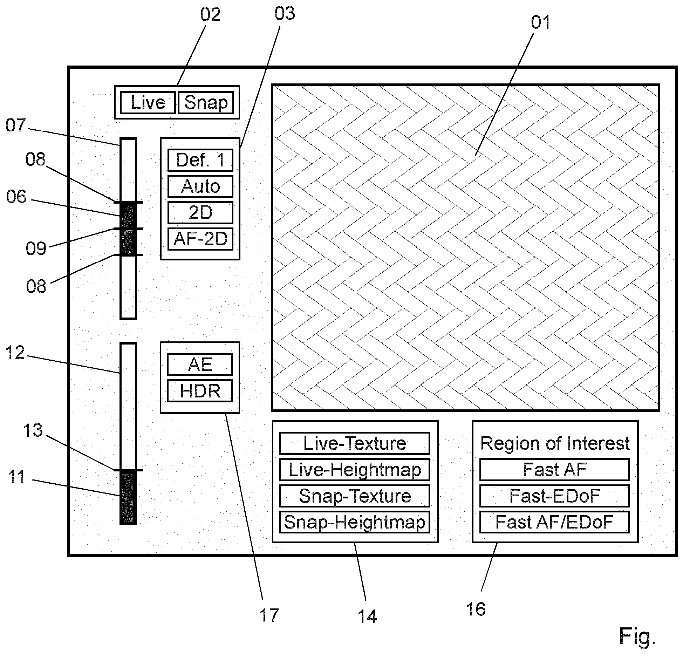

Additional advantages, details and refinements of the invention will become apparent from the following description of a preferred embodiment of the invention, making reference to the drawing.

The only Fig. shows a graphical user interface of a preferred embodiment of a digital microscope according to the invention.

That digital microscope can be used, e. g. for shop-floor microscopy. The digital microscope according to the invention can be used by a user of any level of education and preparation since its graphical user interface is simple and user-friendly. The user can use the digital microscope as an efficient tool in his daily routine. An example of usage is supervision. According to this example, the user makes supervision and control of six machines (not shown) for drills production at a factory shop floor. Every 30 minutes or on demand, the user visits each machine in a turn and takes a sample (not shown) to be inspected under the microscope. The sample is a drill bit (not shown) that must be inspected with a particular microscopic magnification as, e. g. 2.5× to fulfil resolution and size requirements. The requirement to inspect the drill bit (not shown) fast benefits from an extended depth of field that is provided by the digital microscope. This embodiment of the digital microscope allows seeing a complete microscopic image in form of a volume in order to inspect a three-dimensional structure of the drill (not shown) at once. The user can rotate drill (not shown) while inspecting. The user can rotate it either by hand or using a specialized manipulator (not shown). The user can observe the constant quality and the absence of any defect. The user can ensure that quality degradation does not occur. A pre-defined quality degradation will indicate need for particular adjustments on one of the machines (not shown). The user is enabled to quickly document a quality level with high attentions to details.

The preferred embodiment of the digital microscope provides live microscopic images 01 of the sample with an extended depth of field and live microscopic images 01 that are completely in focus. Pursuant to a method according to the invention, the user has to adjust only one parameter or only very few parameters in order the configure the digital microscope for capturing and displaying the live microscopic images 01 of the sample with an extended depth of field (EDoF) or the live microscopic images 01 that are completely in focus based on an autofocus (AF). These live microscopic images 01 that are completely in focus are also referred to as all-in-focus images (AIF). The described user-friendly manual configuration is done via the shown graphical user interface.

The shown graphical user interface comprises a presentation of the live microscopic images 01 of the sample (not shown) that is inspected. The graphical user interface further comprises a toggle button 02 for toggling between "live" mode and a "snap" mode. The "live" mode can also be named as "navigation" mode and allows live capturing and live displaying of the microscopic images 01 that are images with an extended depth of field (EDoF) or images that are completely in focus (AF). In the "snap" mode, individual still microscopic images 01 that are still images with an extended depth of field (EDoF) or still images that are completely in focus (AF) are captured and stored.

The graphical user interface further comprises a first menu 03. The first menu 03 comprises four menu items that stands for modes of capturing the microscopic images 01 with an extended depth of field (EDoF) or images that are completely in focus based on an autofocus (AF-2D) as three-dimensional images or two-dimensional images (2D). These images that are completely in focus are also referred to as all-in-focus images (AIF). There are also modes with pre-defined parameters (Def. 1) and automatic modes (Auto) as well as modes for specific samples or ranges.

The graphical user interface further comprises a first inner bar 06 in a first outer bar 07. The first outer bar 07 visually represents a range available for capturing visual information in depth. Hence, this range can be named as "MaxZrange". The first inner bar 06 is a filled area within the first outer bar 07. The first inner bar 06 visually represents a range, in which the depth information is actually captured. Hence, this range can be named as "expZrange". The user can interactively move the first inner bar 06 and the user can interactively adjust the ends of the first inner bar 06 in order to adjust the capturing range. An upper limit and a lower limit of the capturing range are visually emphasized by extended lines 08 at the ends of the first inner bar 06. A centre of the capturing range is visually emphasized by a further extended line 09 across the first inner bar 06. The centre of the capturing range is determined based on a position of an actuator of an apparatus (not shown) for gathering the extended depth of field.

The graphical user interface further comprises a second inner bar 11 in a second outer bar 12. The second outer bar 12 visually represents a range available for exposing the sample (not shown). That available exposing range ranges from a minimally available exposure that is zero to a maximally available exposure. Hence, this range can be named as "ExpRange". The second inner bar 12 visually represents a range, in which the sample (not shown) is actually exposed. Hence, this range can be names as applied exposing range. An upper limit of the applied exposing range is visually emphasized by an extended line 13 at the end of the second inner bar 12.

The graphical user interface further comprises a second menu 14. The second menu 14 comprises menu items that stand for modes of displaying the microscopic images with extended depth of field as three-dimensional images with extended depth of field. Such images can also be named as topographic images (Texture). In further modes, the microscopic images are displayed as a heightmap (Heightmap). The modes are divided in "live" modes and "snap" modes. In the "live" modes, the microscopic images 01 are displayed continuously. In the "snap" modes, the microscopic images 01 are displayed as still images. In more preferred embodiments, the second menu 14 is not present since that selection of the mode is done automatically.

The graphical user interface further comprises a third menu 16. The third menu 16 comprises menu items that stand for alternative "live" modes of displaying the microscopic images 01 showing an extended depth of field (Fast-EDoF) or showing a focused area based on an autofocus (Fast AF) or an combination thereof (Fast AF/EDoF), wherein the extended depth of field and the focused area, respectively, are at least present in at least one region of interest. These modes are in accordance with human vision. These modes allow fast investigation and fast navigation.

The graphical user interface further comprises a fourth menu 17. The fourth menu 17 comprises menu items that stand for different modes of illuminating the sample (not shown). These modes comprise a mode for a high dynamic range (HDR) and a mode for automatic exposure (AE).

### List of reference numerals

- 01: microscopic images
- 02: toggle button
- 03: first menu
- 04: -
- 05: -
- 06: first inner bar
- 07: first outer bar
- 08: extended lines
- 09: extended line
- 10: -
- 11: second inner bar
- 12: second outer bar
- 13: extended line
- 14: second menu
- 15: -
- 16: third menu
- 17: fourth menu

## Claims

1. Method for capturing and displaying microscopic images (01) of a sample to be microscopically examined using a digital microscope; wherein the method comprises the following steps:
- capturing a sequence of microscopic images (01) with enhanced visual information in a third geometric dimension, wherein the images (01) with the enhanced visual information in the third geometric dimension are images (01) with an extended depth of field or three-dimensional images (01);
- displaying the sequence of the microscopic images (01) while it is captured;
- determining a capturing range in the third geometric dimension depending on an extent of an area of interest of the sample,
- displaying a visual representation (06) of the capturing range in the third geometric dimension, wherein that visual representation is displayed at a graphical user interface, and wherein at least a lower limit and an upper limit of the capturing range are adjustable at the graphical user interface;
- receiving a user input that defines at least one adjustment of the capturing range in the third geometric dimension resulting in an adjusted capturing range in the third geometric dimension;
- adjusting at least one parameter of detecting visual information in the third geometric dimension according to the adjusted capturing range in the third geometric dimension;
- continuing to capture the sequence of the microscopic images (01) with the enhanced visual information in the third geometric dimension applying the at least one adjusted parameter; and
- continuing to display the sequence of the microscopic images (01) while it is captured;
wherein the least one parameter of detecting visual information in the third geometric dimension comprises:
∘ a selection of an objective of a set of exchangeable objectives,
∘ an optical magnification of an objective,
∘ a step size in the third geometric dimension,
∘ a number of steps in the third geometric dimension,
∘ a field of view,
∘ an illumination setting,
∘ an illumination condition,
∘ an option for an automatic correction of reflexes,
∘ an option for an automatic telecentric correction,
∘ a rate of images per second,
∘ a rate of volumes per second,
∘ a depth quality threshold,
∘ a smoothing index,
∘ an index of a pixelwise iteration,
∘ a depthwise kernel size,
∘ a value of a bilateral sigma colour,
∘ a value of a bilateral sigma space;
∘ a resize ratio,
∘ a number of threads,
∘ a spectral range of an illumination,
∘ a frequency of a stroboscopic illumination,
∘ an acquisition time,
∘ a selection of rings of illumination,
∘ a selection of a coaxial illumination,
∘ an exposure time,
∘ a mode of white balance, and/or
∘ a camera gain.

2. Method according to claim 1, **characterized in that** an available range in the third geometric dimension is determined based on properties of the used digital microscope.

3. Method according to claim 2, **characterized in that** the visual representation of the capturing range in the third geometric dimension is an inner bar (06) in an outer bar (07), wherein the outer bar (07) visually represents the available range in the third geometric dimension.

4. Method according to one of the claims 1 to 3, **characterized in that** it comprises a step, in which parameters of capturing and/or displaying the microscopic images (01) with the enhanced visual information in the third geometric dimension are automatically determined before the sample is microscopically examined.

5. Method according to claim 4, **characterized in that** the parameters to be automatically determined before the sample is microscopically examined comprise:
- a selection of an objective of a set of exchangeable objectives,
- an optical magnification of an objective,
- an illumination,
- a spectral range of an illumination,
- a frequency of a stroboscopic illumination,
- an acquisition time, and/or
- a camera gain.

6. Method according to one of the claims 1 to 5, **characterized in that** it further comprises the following steps:
- displaying a visual representation (12) of an available exposing range that ranges from a minimally available exposure to a maximally available exposure of the sample, wherein that visual representation (12) of the exposing range is displayed at the graphical user interface,
- receiving a further user input that defines a selected exposing range (11) that ranges from a minimally applicable exposure to a maximally applicable exposure of the sample.

7. Method according to claim 6, **characterized in that** the selected exposing range is visually represented at the graphical user interface as an inner bar (11) in an outer bar (12) that visually represents the available exposing range.

8. Method according to one of the claims 1 to 7, **characterized in that** it further comprises the following steps:
- displaying a first menu (03) at the graphical user interface, wherein the first menu (03) comprises at least two menu items, wherein each of the menu items stands for a mode of capturing microscopic images (01), wherein at least one of the modes describes capturing of microscopic images (01) with enhanced visual information in the third geometric dimension; and
- receiving a user input of selecting one of the first menu items of the first menu (03).

9. Method according to one of the claims 1 to 8, **characterized in that** it further comprises the following steps:
- displaying a second menu (14) at the graphical user interface, wherein the second menu (14) comprises at least two menu items, wherein at least one of the menu items stands for a mode of displaying the microscopic images (01) with enhanced visual information in the third geometric dimension; and
- receiving a user input of selecting one of the menu items of the second menu (14).

10. Method according to one of the claims 1 to 9, **characterized in that** a mode of displaying the microscopic images (01) with enhanced visual information in the third geometric dimension as images with an extended depth of field is selected automatically if the user uses a two-dimensional display for watching the microscopic images (01), wherein a mode of displaying the microscopic images (01) with enhanced visual information in the third geometric dimension as 2.5-dimensional images or as three-dimensional images is selected automatically if the user uses a 2.5-dimensional display or a three-dimensional display for watching the microscopic images (01).

11. Method according to one of the claims 1 to 10, **characterized in that** an option (16) is displayed at the graphical user interface, wherein this option (16) stands for a mode of displaying the microscopic images (01) with enhanced visual information in the third geometric dimension as microscopic images (01) showing an extended depth of field and/or showing a focused area, wherein the extended depth of field or the focused area is at least present in at least one region of interest.

12. Method according to one of the claims 1 to 11, **characterized in that** a tool for measuring is presented at the graphical user interface, wherein a user input on that tool is received, wherein geometric data are determined by image data processing of the captured sequence of the microscopic images (01) with enhanced visual information in the third geometric dimension, and wherein the user input is applied to the geometric data in order to calculate a measure that is output at the graphical user interface.

13. Digital microscope for capturing microscopic images of a sample to be microscopically examined; comprising:
- an objective for gathering light from the sample to be microscopically examined, wherein the objective comprises at least one lens;
- an image sensor for converting an image transferred from the objective to the image sensor into an electrical signal;
- an illumination unit for illuminating the sample;
- an apparatus for capturing enhanced visual information in the third geometric dimension;
- a graphical user interface; and
- a control circuitry that is configured for executing a method according to one of the claims 1 to **12.**

## Patentansprüche

1. Verfahren zum Aufnehmen und Anzeigen mikroskopischer Bilder (01) einer mikroskopisch zu untersuchenden Probe unter Verwendung eines digitalen Mikroskops; wobei das Verfahren die folgenden Schritte umfasst:
- Aufnehmen einer Folge von mikroskopischen Bildern (01) mit erweiterten visuellen Informationen in einer dritten geometrischen Dimension, wobei die Bilder (01) mit den erweiterten visuellen Informationen in der dritten geometrischen Dimension Bilder (01) mit einer erweiterten Schärfentiefe oder dreidimensionale Bilder (01) sind;
- Anzeigen der Folge der mikroskopischen Bilder (01), während sie aufgenommen wird;
- Festlegen eines Aufnahmebereichs in der dritten geometrischen Dimension in Abhängigkeit von der Ausdehnung eines Untersuchungsbereichs der Probe,
- Anzeigen einer visuellen Repräsentation (06) des Aufnahmebereichs in der dritten geometrischen Dimension, wobei diese visuelle Repräsentation (06) auf einer grafischen Benutzeroberfläche angezeigt wird und wobei zumindest eine Untergrenze und eine Obergrenze des Aufnahmebereichs auf der grafischen Benutzeroberfläche einstellbar sind;
- Empfangen einer Benutzereingabe, die mindestens eine Anpassung des Aufnahmebereichs in der dritten geometrischen Dimension definiert, was zu einem angepassten Aufnahmebereich in der dritten geometrischen Dimension führt;
- Anpassen mindestens eines Parameters zur Erfassung visueller Informationen in der dritten geometrischen Dimension entsprechend dem angepassten Aufnahmebereich in der dritten geometrischen Dimension;
- Fortsetzen des Aufnehmens der Folge der mikroskopischen Bilder (01) mit den erweiterten visuellen Informationen in der dritten geometrischen Dimension unter Anwendung des mindestens einen angepassten Parameters; und
- Fortsetzen des Anzeigens der Folge der mikroskopischen Bilder (01), während sie aufgenommen wird;
wobei der mindestens eine Parameter zur Erfassung visueller Informationen in der dritten geometrischen Dimension umfasst:
∘ eine Auswahl eines Objektivs aus einem Satz austauschbarer Objektive,
∘ eine optische Vergrößerung eines Objektivs,
∘ eine Schrittweite in der dritten geometrischen Dimension,
∘ eine Anzahl von Schritten in der dritten geometrischen Dimension,
∘ ein Sichtfeld,
∘ eine Beleuchtungseinstellung,
∘ eine Beleuchtungsbedingung,
∘ eine Option für eine automatische Korrektur von Reflexionen,
∘ eine Option für eine automatische telezentrische Korrektur,
∘ eine Bildrate pro Sekunde,
∘ eine Volumenrate pro Sekunde,
∘ einen Schwellenwert für die Tiefenschärfe,
∘ einen Glättungsindex,
∘ einen Index für eine pixelweise Iteration,
∘ eine Kernelgröße in der Tiefenrichtung,
∘ einen Wert einer bilateralen Sigma-Farbe,
∘ einen Wert eines bilateralen Sigma-Raums;
∘ ein Skalierungsverhältnis,
∘ eine Anzahl von Threads,
∘ einen Spektralbereich einer Beleuchtung,
∘ eine Frequenz einer stroboskopischen Beleuchtung,
∘ eine Aufnahmezeit,
∘ eine Auswahl an Beleuchtungsringen,
∘ eine Auswahl einer koaxialen Beleuchtung,
∘ eine Belichtungszeit,
∘ einen Weißabgleichmodus und/oder
∘ eine Kameraverstärkung.

2. Verfahren nach Anspruch 1, **dadurch gekennzeichnet, dass** ein verfügbarer Bereich in der dritten geometrischen Dimension auf der Grundlage von Eigenschaften des verwendeten Digitalmikroskops bestimmt wird.

3. Verfahren nach Anspruch 2, **dadurch gekennzeichnet, dass** die visuelle Repräsentation des Aufnahmebereichs in der dritten geometrischen Dimension ein innerer Balken (06) in einem äußeren Balken (07) ist, wobei der äußere Balken (07) den verfügbaren Bereich in der dritten geometrischen Dimension visuell repräsentiert.

4. Verfahren nach einem der Ansprüche 1 bis 3, **dadurch gekennzeichnet, dass** es einen Schritt umfasst, bei welchem Parameter zum Aufnehmen und/oder Anzeigen der mikroskopischen Bilder (01) mit den erweiterten visuellen Informationen in der dritten geometrischen Dimension automatisch bestimmt werden, bevor die Probe mikroskopisch untersucht wird.

5. Verfahren nach Anspruch 4, **dadurch gekennzeichnet, dass** die vor der mikroskopischen Untersuchung der Probe automatisch zu bestimmenden Parameter umfassen:
- die Auswahl eines Objektivs aus einem Satz austauschbarer Objektive,
- eine optische Vergrößerung eines Objektivs,
- eine Beleuchtung,
- einen Spektralbereich einer Beleuchtung,
- eine Frequenz einer stroboskopischen Beleuchtung,
- eine Aufnahmezeit und/oder
- eine Kameraverstärkung.

6. Verfahren nach einem der Ansprüche 1 bis 5, **dadurch gekennzeichnet, dass** es ferner die folgenden Schritte umfasst:
- Anzeigen einer visuellen Repräsentation (12) eines verfügbaren Belichtungsbereichs, der von einer minimal verfügbaren Belichtung bis zu einer maximal verfügbaren Belichtung der Probe reicht, wobei diese visuelle Repräsentation (12) des Belichtungsbereichs auf der grafischen Benutzeroberfläche angezeigt wird,
- Empfangen einer weiteren Benutzereingabe, die einen ausgewählten Belichtungsbereich (11) definiert, der von einer minimal anwendbaren Belichtung bis zu einer maximal anwendbaren Belichtung der Probe reicht.

7. Verfahren nach Anspruch 6, **dadurch gekennzeichnet, dass** der ausgewählte Belichtungsbereich auf der grafischen Benutzeroberfläche visuell als innerer Balken (11) in einem äußeren Balken (12) dargestellt wird, der den verfügbaren Belichtungsbereich visuell repräsentiert.

8. Verfahren nach einem der Ansprüche 1 bis 7, **dadurch gekennzeichnet, dass** es ferner die folgenden Schritte umfasst:
- Anzeigen eines ersten Menüs (03) auf der grafischen Benutzeroberfläche, wobei das erste Menü (03) mindestens zwei Menüpunkte umfasst, wobei jeder der Menüpunkte für einen Modus zur Aufnahme mikroskopischer Bilder (01) steht, wobei mindestens einer der Modi die Aufnahme mikroskopischer Bilder (01) mit erweiterten visuellen Informationen in der dritten geometrischen Dimension beschreibt; und
- Empfangen einer Benutzereingabe zur Auswahl eines der Menüpunkte des ersten Menüs (03).

9. Verfahren nach einem der Ansprüche 1 bis 8, **dadurch gekennzeichnet, dass** es ferner die folgenden Schritte umfasst:
- Anzeigen eines zweiten Menüs (14) auf der grafischen Benutzeroberfläche, wobei das zweite Menü (14) mindestens zwei Menüpunkte umfasst, wobei mindestens einer der Menüpunkte für einen Modus zur Anzeige der mikroskopischen Bilder (01) mit erweiterten visuellen Informationen in der dritten geometrischen Dimension steht; und
- Empfangen einer Benutzereingabe zur Auswahl eines der Menüpunkte des zweiten Menüs (14).

10. Verfahren nach einem der Ansprüche 1 bis 9, **dadurch gekennzeichnet, dass** ein Modus zum Anzeigen der mikroskopischen Bilder (01) mit erweiterten visuellen Informationen in der dritten geometrischen Dimension als Bilder mit einer erweiterten Schärfentiefe automatisch ausgewählt wird, wenn der Benutzer eine zweidimensionale Anzeige zum Betrachten der mikroskopischen Bilder (01) verwendet, wobei ein Modus zum Anzeigen der mikroskopischen Bilder (01) mit erweiterten visuellen Informationen in der dritten geometrischen Dimension als 2,5-dimensionale Bilder oder als dreidimensionale Bilder automatisch ausgewählt wird, wenn der Benutzer eine 2,5-dimensionale Anzeige oder eine dreidimensionale Anzeige zum Betrachten der mikroskopischen Bilder (01) verwendet.

11. Verfahren nach einem der Ansprüche 1 bis 10, **dadurch gekennzeichnet, dass** auf der grafischen Benutzeroberfläche eine Option (16) angezeigt wird, wobei diese Option (16) für einen Modus zum Anzeigen der mikroskopischen Bilder (01) mit erweiterten visuellen Informationen in der dritten geometrischen Dimension als mikroskopische Bilder (01), die eine erweiterte Schärfentiefe und/oder einen fokussierten Bereich zeigen, steht, wobei die erweiterte Schärfentiefe oder der fokussierte Bereich zumindest in mindestens einem Untersuchungsbereich vorhanden ist.

12. Verfahren nach einem der Ansprüche 1 bis 11, **dadurch gekennzeichnet, dass** auf der grafischen Benutzeroberfläche ein Werkzeug zum Messen dargestellt wird, wobei eine Benutzereingabe über dieses Werkzeug empfangen wird, wobei durch Bilddatenverarbeitung der aufgenommenen Folge der mikroskopischen Bilder (01) mit erweiterten visuellen Informationen in der dritten geometrischen Dimension geometrische Daten ermittelt werden, und wobei die Benutzereingabe auf die geometrischen Daten angewendet wird, um ein Maß zu berechnen, das auf der grafischen Benutzeroberfläche ausgegeben wird.

13. Digitales Mikroskop zur Aufnahme mikroskopischer Bilder einer mikroskopisch zu untersuchenden Probe; umfassend:
- ein Objektiv zum Sammeln von Licht von der mikroskopisch zu untersuchenden Probe, wobei das Objektiv mindestens eine Linse umfasst;
- einen Bildsensor zum Umwandeln eines vom Objektiv auf den Bildsensor übertragenen Bildes in ein elektrisches Signal;
- eine Beleuchtungseinheit zum Beleuchten der Probe;
- eine Vorrichtung zur Erfassung erweiterter visueller Informationen in der dritten geometrischen Dimension;
- eine grafische Benutzeroberfläche; und
- eine Steuerschaltung, die zur Ausführung eines Verfahrens gemäß einem der Ansprüche 1 bis 12 ausgelegt ist.

## Revendications

1. Procédé destiné à capturer et afficher des images microscopiques (01) d'un échantillon à examiner au niveau microscopique au moyen d'un microscope numérique, le procédé comprenant les étapes suivantes :
- capture d'une séquence d'images microscopiques (01) avec des informations visuelles enrichies dans une troisième dimension géométrique, les images (01) avec les informations visuelles enrichies dans la troisième dimension géométrique étant des images (01) avec une profondeur de champ étendue ou des images tridimensionnelles (01) ;
- affichage de la séquence des images microscopiques (01) pendant qu'elle est capturée ;
- détermination d'une plage de capture dans la troisième dimension géométrique en fonction d'une étendue d'une zone d'intérêt de l'échantillon ;
- affichage d'une représentation visuelle (06) de la plage de capture dans la troisième dimension géométrique, cette représentation visuelle étant affichée sur une interface utilisateur graphique, et au moins une limite inférieure et une limite supérieure de la plage de capture étant réglables sur l'interface utilisateur graphique ;
- réception d'une entrée utilisateur qui définit au moins un réglage de la plage de capture dans la troisième dimension géométrique donnant lieu à une plage de capture réglée dans la troisième dimension géométrique ;
- réglage d'au moins un paramètre de détection d'informations visuelles dans la troisième dimension géométrique en fonction de la plage de capture réglée dans la troisième dimension géométrique ;
- poursuite de la capture de la séquence des images microscopiques (01) avec les informations visuelles enrichies dans la troisième dimension géométrique avec application de l'au moins un paramètre réglé ; et
- poursuite de l'affichage de la séquence des images microscopiques (01) pendant qu'elle est capturée ;
dans lequel l'au moins un paramètre de détection d'informations visuelles dans la troisième dimension géométrique comprend :
∘ une sélection d'un objectif d'un ensemble d'objectifs échangeables,
∘ un grossissement optique d'un objectif,
∘ une taille de pas dans la troisième dimension géométrique,
∘ un nombre de pas dans la troisième dimension géométrique,
∘ un champ de vision,
∘ un réglage d'éclairage,
∘ une condition d'éclairage,
∘ une option de correction automatique des reflets,
∘ une option de correction télécentrique automatique,
∘ une cadence d'images par seconde,
∘ une cadence de volumes par seconde,
∘ un seuil de qualité de profondeur,
∘ un indice de lissage,
∘ un indice d'une itération par pixel,
∘ une taille de noyau en profondeur,
∘ une valeur d'une couleur sigma bilatérale,
∘ une valeur d'un espace sigma bilatéral,
∘ un rapport de redimensionnement,
∘ un nombre de filets,
∘ un domaine spectral d'un éclairage,
∘ une fréquence d'un éclairage stroboscopique,
∘ un temps d'acquisition,
∘ une sélection d'anneaux d'éclairage,
∘ une sélection d'un éclairage coaxial,
∘ un temps d'exposition,
∘ un mode de balance des blancs, et/ou
∘ un gain de caméra.

2. Procédé selon la revendication 1, **caractérisé en ce qu'**une plage disponible dans la troisième dimension géométrique est déterminée d'après des propriétés du microscope numérique utilisé.

3. Procédé selon la revendication 2, **caractérisé en ce que** la représentation visuelle de la plage de capture dans la troisième dimension géométrique est une barre intérieure (06) dans une barre extérieure (07), la barre extérieure (07) représentant visuellement la plage disponible dans la troisième dimension géométrique.

4. Procédé selon une des revendications 1 à 3, **caractérisé en ce qu'**il comprend une étape dans laquelle des paramètres de capture et/ou d'affichage des images microscopiques (01) avec les informations visuelles enrichies dans la troisième dimension géométrique sont déterminés automatiquement avant l'examen microscopique de l'échantillon.

5. Procédé selon la revendication 4, **caractérisé en ce que** les paramètres à déterminer automatiquement avant l'examen microscopique de l'échantillon comprennent :
- une sélection d'un objectif d'un ensemble d'objectifs échangeables,
- un grossissement optique d'un objectif,
- un éclairage,
- un domaine spectral d'un éclairage,
- une fréquence d'un éclairage stroboscopique,
- un temps d'acquisition, et/ou
- un gain de caméra.

6. Procédé selon une des revendications 1 à 5, **caractérisé en ce qu'**il comprend en outre les étapes suivantes :
- affichage d'une représentation visuelle (12) d'une plage d'exposition disponible qui va d'une exposition minimale disponible à une exposition maximale disponible de l'échantillon, cette représentation visuelle (12) de la plage d'exposition étant affichée sur l'interface utilisateur graphique,
- réception d'une autre entrée utilisateur qui définit une plage d'exposition sélectionnée (11) qui va d'une exposition minimale applicable à une exposition maximale applicable de l'échantillon.

7. Procédé selon la revendication 6, **caractérisé en ce que** la plage d'exposition sélectionnée est représentée visuellement sur l'interface utilisateur graphique sous la forme d'une barre intérieure (11) dans une barre extérieure (12) qui représente visuellement la plage d'exposition disponible.

8. Procédé selon une des revendications 1 à 7, **caractérisé en ce qu'**il comprend en outre les étapes suivantes :
- affichage d'un premier menu (03) sur l'interface utilisateur graphique, le premier menu (03) comprenant au moins deux options de menu, chacune des options de menu représentant un mode de capture d'images microscopiques (01), au moins un des modes décrivant la capture d'images microscopiques (01) avec des informations visuelles enrichies dans la troisième dimension géométrique ; et
- réception d'une entrée utilisateur pour sélectionner une des premières options de menu du premier menu (03).

9. Procédé selon une des revendications 1 à 8, **caractérisé en ce qu'**il comprend en outre les étapes suivantes :
- affichage d'un deuxième menu (14) sur l'interface utilisateur graphique, le deuxième menu (14) comprenant au moins deux options de menu, au moins une des options de menu représentant un mode d'affichage des images microscopiques (01) avec des informations visuelles enrichies dans la troisième dimension géométrique ; et
- réception d'une entrée utilisateur pour sélectionner une des options de menu du deuxième menu (14).

10. Procédé selon une des revendications 1 à 9, **caractérisé en ce qu'**un mode d'affichage des images microscopiques (01) avec des informations visuelles enrichies dans la troisième dimension géométrique sous forme d'images avec une profondeur de champ étendue est sélectionné automatiquement si l'utilisateur se sert d'un affichage bidimensionnel pour regarder les images microscopiques (01), un mode d'affichage des images microscopiques (01) avec des informations visuelles enrichies dans la troisième dimension géométrique sous forme d'images à 2,5 dimensions ou sous forme d'images tridimensionnelles étant sélectionné automatiquement si l'utilisateur se sert d'un affichage à 2,5 dimensions ou d'un affichage tridimensionnel pour regarder les images microscopiques (01).

11. Procédé selon une des revendications 1 à 10, **caractérisé en ce qu'**une option (16) est affichée sur l'interface utilisateur graphique, cette option (16) représentant un mode d'affichage des images microscopiques (01) avec des informations visuelles enrichies dans la troisième dimension géométrique sous forme d'images microscopiques (01) présentant une profondeur de champ étendue et/ou présentant une zone mise au point, la profondeur de champ étendue ou la zone mise au point étant au moins présente dans au moins une région d'intérêt.

12. Procédé selon une des revendications 1 à 11, **caractérisé en ce qu'**un outil de mesure est présenté sur l'interface utilisateur graphique, dans lequel une entrée utilisateur sur cet outil est reçue, dans lequel des données géométriques sont déterminées par traitement de données d'image de la séquence capturée des images microscopiques (01) avec des informations visuelles enrichies dans la troisième dimension géométrique, et dans lequel l'entrée utilisateur est appliquée aux données géométriques afin de calculer une mesure qui est restituée sur l'interface utilisateur graphique.

13. Microscope numérique destiné à capturer des images microscopiques d'un échantillon à examiner au niveau microscopique, comprenant :
- un objectif pour collecter la lumière provenant de l'échantillon à examiner au niveau microscopique, l'objectif comprenant au moins une lentille ;
- un capteur d'images pour convertir une image transférée de l'objectif au capteur d'images en un signal électrique ;
- une unité d'éclairage pour éclairer l'échantillon ;
- un appareil pour capturer des informations visuelles enrichies dans la troisième dimension géométrique ;
- une interface utilisateur graphique ; et
- des circuits de commande qui sont conçus pour exécuter un procédé selon une des revendications 1 à 12.
